# EUROPEAN PATENT APPLICATION

(11) **EP 4 815 563 A1**
(43) Date of publication of application: **30.09.2026**
(21) Application number: 24909839.3
(22) Date of filing: 14.08.2024
(51) Int. Cl.: H04W 36/14, H04W 36/16

(54) **DATA TRANSMISSION METHOD AND APPARATUS**

(30) Priority: 29.12.2023 CN 202311870014
(71) Applicant: Honor Device Co., Ltd., Shenzhen, Guangdong 518040 (CN)
(72) Inventor: PANG, Gaokun, Shenzhen, Guangdong 518040 (CN)
(74) Representative: Gill Jennings & Every LLP
(86) International application number: PCT/CN2024/112190
(87) International publication number: WO 2025/138888

(57) **Abstract**

This application provides a data communication method and apparatus, and relates to the field of communication technologies. A core network device can schedule network slices more rationally, thereby improving the utilization rate of network resources. The method includes: sending first information to a terminal device when it is determined that a preset condition is satisfied, where the first information is configured for indicating enabling a first network slice and/or disabling a second network slice, and the preset condition is related to a load and/or a network status of the core network device; and receiving service data from the terminal device based on the first information.

## Description

This application claims priority to Chinese Patent Application No. 202311870014.4, entitled "DATA TRANSMISSION METHOD AND APPARATUS" filed with the China National Intellectual Property Administration on December 29, 2023, which is incorporated herein by reference in its entirety.

### TECHNICAL FIELD

This application relates to the field of communication technologies, and in particular, to a data transmission method and apparatus.

### BACKGROUND

The types of terminal devices and services provided by the terminal devices are increasing. If different types of services are served by the same network, it will be difficult to meet diversified service requirements of the terminal devices. Therefore, providing differentiated network services for different services through a network slicing technology has become one of the important approaches to improve network quality at present.

Network slicing is an on-demand networking mode, which enables operators to slice a plurality of virtual end-to-end networks on a unified infrastructure. Each network slice is logically isolated from a radio access network to a bearer network and then to a core network, and is adapted to various types of service applications. However, a core network device may have a single scheduling mode for network slices, resulting in low utilization rate of network resources.

Therefore, there is an urgent need to provide a method to enable the core network device to schedule network slices more rationally and improve the utilization rate of network resources.

### SUMMARY

This application provides a data transmission method and apparatus. A core network device can schedule network slices more rationally, thereby improving the utilization rate of network resources.

According to a first aspect, a data transmission method is provided, including: sending first information to a terminal device when it is determined that a preset condition is satisfied, where the first information is configured for indicating enabling a first network slice and/or disabling a second network slice, and the preset condition is related to a load and/or a network status of the core network device; and receiving service data from the terminal device based on the first information.

In the data transmission method of this application, the core network device may enable the first network slice and/or disable the second network slice based on a network load, a core network device load, etc. For example, when the network load is high, a network slice corresponding to an application with high bandwidth and latency requirements may be disabled, and/or an application with low bandwidth and latency requirements may be enabled. When the load of the core network device is high, for example, when a memory occupancy rate is excessively high, all network slices may be disabled. In this way, the core network device may more rationally indicate the terminal device to enable or disable a particular type of network slice through an access network device based on the network status, the core network device load, etc., so that the core network device can schedule network slices more rationally, thereby helping to improve the utilization rate of network resources.

It should be understood that the load of the core network device may include, for example, an occupation rate of processor resources and/or an occupation rate of memory resources. The network status may include, for example, one or more of the following: a network resource occupancy rate, a ratio of the number of users accessing the second network slice to a saturation value, a disconnection rate of terminal devices not accessing the second network slice, a packet loss rate of terminal devices not accessing the second network slice, or a network latency of terminal devices not accessing the second network slice.

With reference to the first aspect, in some implementations of the first aspect, the first information is configured for indicating disabling the second network slice, and the preset condition includes one or more of the following: an occupancy rate of processor resources is greater than or equal to a first preset threshold; an occupancy rate of memory resources is greater than or equal to a second preset threshold; an occupancy rate of network resources is greater than or equal to a third preset threshold; a ratio of the number of users accessing the second network slice to a saturation value is greater than or equal to a fourth preset threshold; a disconnection rate of terminal devices not accessing the second network slice is greater than or equal to a fifth preset threshold; a packet loss rate of terminal devices not accessing the second network slice is greater than or equal to a sixth preset threshold; or a network latency of terminal devices not accessing the second network slice is greater than or equal to a seventh preset threshold.

In this way, when the load of the core network device is high and/or the load of network resources is high, an indication may be sent to disable the second network slice. Therefore, excessive concentration of network resources on serving an application corresponding to the second network slice is prevented, helping to balance the distribution of network resources, so that the core network device schedules network resources more rationally. When the ratio of the number of users accessing the second network slice to the saturation value is excessively high, and/or when the disconnection rate, packet loss rate, and/or network latency of terminal devices not accessing the second network slice are high, excessive concentration of network resources on serving the application corresponding to the second network slice may further be prevented. Consequently, more network resources are available for the terminal devices not accessing the second network slice, helping to balance the distribution of network resources.

With reference to the first aspect, in some implementations of the first aspect, the method further includes: receiving, from terminal devices not accessing the second network slice, information for indicating network data, where the network data includes one or more of the following: a disconnection rate, a packet loss rate, or a network latency.

With reference to the first aspect, in some implementations of the first aspect, the first information is configured for indicating enabling the first network slice, and the preset condition includes one or more of the following: an occupancy rate of processor resources is less than or equal to an eighth preset threshold; an occupancy rate of memory resources is less than or equal to a ninth preset threshold; or an occupancy rate of network resources is less than or equal to a tenth preset threshold.

In this way, when the load of the core network device is low and/or the load of network resources is low, the core network device may indicate enabling the first network slice. The first network slice may refer to all or part of the network slices, and may be applicable to, for example, a game application or a video-audio application. It is conducive to satisfying differentiated service requirements and improving the utilization rate of network resources.

With reference to the first aspect, in some implementations of the first aspect, the first network slice and/or the second network slice is one or more of the following: an uplink network slice, a downlink network slice, a network slice serving a first application, a network slice with a bandwidth greater than or equal to a first threshold, or a network slice with a bandwidth less than or equal to a second threshold.

With reference to the first aspect, in some implementations of the first aspect, the method further includes: sending second information to the terminal device, where the second information is configured for indicating the first network slice and/or the second network slice. In this way, the core network device may determine a network slice to be disabled or enabled according to the network status, the core network device load, etc., and then indicate the type of the network slice through the second information.

With reference to the first aspect, in some implementations of the first aspect, the first information and/or the second information satisfies one of the following: the first information is broadcast; or the first information is carried in a first request, where the first request is configured for requesting to modify a session; or the first information is carried in a second request, where the second request is configured for requesting to de-register a session.

The first request may be understood as a policy control update notification request, and the second request may be understood as a de-registration request.

With reference to the first aspect, in some implementations of the first aspect, the method further includes: receiving a third request from the terminal device, where the third request is configured for requesting to enable the first network slice and/or disable the second network slice. The sending first information to the terminal device includes: sending the first information to the terminal device in response to the third request. The terminal device may request the core network device to enable or disable a network slice according to user requirements, thereby improving user experience.

With reference to the first aspect, in some implementations of the first aspect, the first information is configured for indicating enabling the first network slice. The service data is data generated by running of a first application. The service data is transmitted through a first PDU session corresponding to the first network slice. The first network slice is matched with the first application.

In this way, the terminal device may transmit the service data by using the first PDU session dedicated to the first application, thereby helping to satisfy differentiated service requirements and improve the utilization rate of network resources.

With reference to the first aspect, in some implementations of the first aspect, the first information is configured for indicating disabling the second network slice. The service data is transmitted through a second PDU session. The second PDU session is a default PDU session.

In this way, when the core network device load is high and/or the network load is high, the terminal device may transmit service data by using a default PDU session, thereby preventing excessive imbalance in the distribution of network resources.

According to a second aspect, another data transmission method is provided, including: receiving first information from a core network device, where the first information is configured for indicating enabling a first network slice and/or disabling a second network slice; and sending service data to the core network device based on the first information.

With reference to the second aspect, in some implementations of the second aspect, the first network slice and/or the second network slice is one or more of the following: an uplink network slice, a downlink network slice, a network slice serving a first application, a network slice with a bandwidth greater than or equal to a first threshold, or a network slice with a bandwidth less than or equal to a second threshold.

With reference to the second aspect, in some implementations of the second aspect, the method further includes: receiving second information from the core network device, where the second information is configured for indicating the first network slice and/or the second network slice.

With reference to the second aspect, in some implementations of the second aspect, the first information satisfies one of the following: the first information is broadcast; or the first information is carried in a first request, where the first request is configured for requesting to modify a session; or the first information is carried in a second request, where the second request is configured for requesting to de-register a session.

With reference to the second aspect, in some implementations of the second aspect, the method further includes: sending a third request to the core network device, where the third request is configured for requesting to enable the first network slice and/or disable the second network slice.

With reference to the second aspect, in some implementations of the second aspect, the first information is configured for indicating enabling the first network slice. The sending service data to the core network device includes: sending the service data to the core network device by using a first PDU session corresponding to the first network slice, where the service data is data generated by running of a first application, and the first network slice is matched with the first application.

With reference to the second aspect, in some implementations of the second aspect, the first information is configured for indicating disabling the second network slice. The sending service data to the core network device includes: transmitting the service data by using a second PDU session, where the second PDU session is a default PDU session.

According to a third aspect, a data transmission apparatus is provided, for performing the method in any of possible implementations in the first aspect and the second aspect. Specifically, the apparatus includes a module for performing the method in any of possible implementations in the first aspect and the second aspect.

According to a fourth aspect, this application provides another data transmission apparatus, including a processor. The processor is coupled to a memory, and may be configured to execute instructions in the memory, to implement the method in any of possible implementations in the first aspect and the second aspect. Optionally, the apparatus further includes the memory. Optionally, the apparatus further includes a communication interface. The processor is coupled to the communication interface.

In an implementation, the apparatus is a terminal device. When the apparatus is the terminal device, the communication interface may be a transceiver or an input/output interface.

In another implementation, the apparatus is a chip configured in the terminal device. When the apparatus is the chip configured in the terminal device, the communication interface may be the input/output interface.

In an implementation, the apparatus is a core network device. When the apparatus is the core network device, the communication interface may be a transceiver or an input/output interface.

In another implementation, the apparatus is a chip configured in the core network device. When the apparatus is the chip configured in the core network device, the communication interface may be the input/output interface.

According to a fifth aspect, a processor is provided, including: an input circuit, an output circuit, and a processing circuit. The processing circuit is configured to receive a signal through the input circuit and transmit a signal through the output circuit, so that the processor performs the method in any of possible implementations in the first aspect and the second aspect.

In a specific implementation process, the processor may be a chip. The input circuit may be an input pin. The output circuit may be an output pin. The processing circuit may be a transistor, a gate circuit, a flip-flop, various logic circuits, etc. An input signal received by the input circuit may be received and inputted by, for example, a receiver, a signal outputted by the output circuit may be output to, for example, a transmitter and transmitted by the transmitter, and the input circuit and the output circuit may be the same circuit, where the circuit is separately used as the input circuit and the output circuit at different moments. Specific implementations of the processor and various circuits are not limited in embodiments of this application.

According to a sixth aspect, a processing apparatus is provided, including a processor and a memory. The processor is configured to read instructions stored in the memory, and may receive a signal through a receiver and transmit a signal through a transmitter, to perform the method in any of possible implementations in the first aspect and the second aspect.

Optionally, there are one or more processors, and there are one or more memories.

Optionally, the memory may be integrated with the processor, or the memory and the processor may be separately disposed.

In a specific implementation process, the memory may be a non-transitory (non-transitory) memory, such as a read only memory (read only memory, ROM). The memory and the processor may be integrated on the same chip, or may be disposed on different chips respectively. A type of the memory and a manner of disposing the memory and the processor are not limited in embodiments of this application.

It should be understood that for a related data interaction process, for example, sending indication information may be a process of outputting indication information from the processor, and receiving capability information may be a process of receiving and inputting capability information by the processor. Specifically, data that is processed and outputted may be outputted to the transmitter, and inputted data received by the processor may be from the receiver. The transmitter and the receiver may be collectively referred to as a transceiver.

The processing apparatus in the sixth aspect may be a chip, and the processor may be implemented through hardware or software. When the processor is implemented through hardware, the processor may be a logic circuit, an integrated circuit, etc. When the processor is implemented through software, the processor may be a general-purpose processor and be implemented by reading software code stored in the memory. The memory may be integrated in the processor, or may be located out of the processor and independently exist.

According to a seventh aspect, a computer program product is provided. The computer program product includes a computer program (which may alternatively be referred to as code or instructions). When the computer program is run, a computer is caused to perform the method in any of possible implementations in the first aspect and the second aspect.

According to an eighth aspect, a computer-readable storage medium is provided. The computer-readable storage medium stores a computer program (which may alternatively be referred to as code or instructions). When the computer program runs on a computer, the computer is caused to perform the method in any of possible implementations in the first aspect and the second aspect.

### BRIEF DESCRIPTION OF DRAWINGS

FIG. 1 is a schematic diagram of a communication system to which an embodiment of this application is applicable;
FIG. 2 is a schematic diagram of a scenario to which a method is applicable according to an embodiment of this application;
FIG. 3 is a schematic flowchart of a data transmission method according to an embodiment of this application;
FIG. 4 is a schematic flowchart of a method for sending, by a core network device, first information and/or second information to a terminal device according to an embodiment of this application;
FIG. 5 is a schematic flowchart of another method for sending, by a core network device, first information and/or second information to a terminal device according to an embodiment of this application;
FIG. 6 is a schematic flowchart of a PDU session establishment method according to an embodiment of this application;
FIG. 7 is a schematic block diagram of a data transmission apparatus according to an embodiment of this application; and
FIG. 8 is a schematic block diagram of another data transmission apparatus according to an embodiment of this application.

### DESCRIPTION OF EMBODIMENTS

The following describes technical solutions of this application with reference to the accompanying drawings.

In some embodiments provided by this application, terms such as "first" and "second" are used to distinguish between the same items or similar items that have basically the same functions and roles. For example, a first value and a second value are merely used to distinguish between different values, and are not intended to limit a sequence thereof. A person skilled in the art may understand that the terms such as "first" and "second" do not limit a quantity or an execution order, and the terms such as "first" and "second" do not necessarily indicate a specific difference.

It should be noted that in embodiments of this application, terms such as "by way of example" or "for example" are used to represent giving an example, an illustration, or a description. Any embodiment or design scheme described as "by way of example" or "for example" in this application should not be explained as being more preferred or having more advantages than another embodiment or design scheme. Exactly, the terms such as "by way of example" or "for example" are used to present a related concept in a specific manner.

In embodiments of this application, "at least one" means one or more, and "a plurality of" means two or more. The term "and/or" describes an association relationship between associated objects and represents that three relationships may exist. For example, A and/or B may represent that: only A exists, both A and B exist, and only B exists, where A and B may be singular or plural. The character " generally represents an "or" relationship between the associated objects. "At least one of the following" or a similar expression thereof refers to any combination of these items, including one item or any combination of a plurality of items. For example, at least one of a, b, or c may represent a, b, c, a-b, a--c, b-c, or a-b-c, where a, b, and c may be singular or plural.

The technical solutions of embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, or a new radio (new radio, NR) system, and a future evolved communication system, such as a 6th generation (6th generation, 6G) system.

A terminal device in embodiments of this application may alternatively be referred to as user equipment (user equipment, UE), a mobile station (mobile station, MS), a mobile terminal (mobile terminal, MT), an access terminal, a user unit, a user station, a mobile site, the mobile station, a remote station, a remote terminal, a mobile device, a user terminal, a terminal, a wireless communication device, a user agent, or a user apparatus.

An access network device and a core network device in embodiments of this application may be collectively referred to as network devices.

The core network device in embodiments of this application may be a core network device in a 5G system, such as an access and mobility management function (access and mobility management function, AMF) network element, a policy control function (policy control function, PCF) network element, etc., and may alternatively be a core network device with another name. This is not limited in embodiments of this application.

The access network device may be any device with a wireless transceiver function. The access network device includes, but is not limited to: an evolved Node B (evolved Node B, eNB), a radio network controller (radio network controller, RNC), Node B (Node B, NB), a base station controller (base station controller, BSC), a base transceiver station (base transceiver station, BTS), a home base station (e.g., home evolved NodeB or home Node B, HNB), a baseband unit (baseband unit, BBU), an access point (access point, AP) in a wireless fidelity (wireless fidelity, WiFi) system, a wireless relay node, a wireless backhaul node, a transmission point (transmission point, TP) or a transmission and reception point (transmission and reception point, TRP), etc., may alternatively be a 5G base station (next-Generation Node B, gNB) in a 5G (e.g., NR) system, or a transmission point (TRP or TP), one or a group of antenna panels (including a plurality of antenna panels) of a base station in a 5G system, or a network node constituting a gNB or a transmission point, such as a baseband unit (BBU) or a distributed unit (distributed unit, DU), etc.

In some deployments, the gNB may include a centralized unit (centralized unit, CU) and the DU. The gNB may further include an active antenna unit (active antenna unit, AAU). The CU implements part of the functions of the gNB, and the DU implements part of the functions of the gNB. For example, the CU may be responsible for processing non-real-time protocols and services, such as implementing the functions of a radio resource control (radio resource control, RRC) layer, a service data adaptation protocol (service data adaptation protocol, SDAP) layer, and/or a packet data convergence protocol (packet data convergence protocol, PDCP) layer. The DU may be responsible for processing physical layer protocols and real-time services, for example, implementing the functions of a radio link control (radio link control, RLC) layer, a media access control (media access control, MAC) layer, and a physical (PHY) layer. A single DU may be connected to only one CU or a plurality of CUs, while a single CU may be connected to a plurality of Dus. The communication between the CU and the DU may be performed through an F1 interface. The AAU may implement some physical layer processing functions, radio frequency processing, and a function related to an active antenna. Since information at the RRC layer eventually becomes information at the PHY layer, or is converted from information at the PHY layer, in this architecture, higher layer signaling, for example, RRC layer signaling, may alternatively be considered as being sent by the DU, or sent by the DU and the AAU.

It may be understood that the access network device may be a device including one or more of a CU node, a DU node, and an AAU node. In addition, the CU may be classified as an access network device in a radio access network (radio access network, RAN), or the CU may be classified as an access network device in a core network (core network, CN). This is not limited in this application.

The access network device provides a service for a cell, and the terminal device communicates with the cell by using a transmission resource (e.g., a frequency domain resource or a spectrum resource) allocated by the access network device. The cell may belong to a macro base station (e.g., macro eNB or macro gNB), or may belong to a base station corresponding to a small cell (small cell). The small cell herein may include: a metro cell (metro cell), a micro cell (micro cell), a pico cell (pico cell), a femto cell (femto cell), and the like. These small cells have features of small coverage and low transmit power, and are suitable for providing high-speed data transmission services.

The following describes some technical terms involved in this application.
1. Network slicing (network slicing) is an on-demand networking mode, which enables operators to slice a plurality of virtual end-to-end networks on a unified infrastructure. Each network slice is logically isolated from a radio access network to a bearer network and then to a core network, and is adapted to various types of service applications. A network slice may include a radio sub-slice, a bearer sub-slice, and a core network sub-slice. The network slice may alternatively be understood as a logical network formed by combining related service functions, network resources, and network configurations in a physical network.
2. Network slice selection assistance information (network slice selection assistance information, NSSAI) may be information for identifying network slices. For example, the NSSAI may include information for indicating a slice/service type (slice/service type, SST) and/or information for indicating a slice differentiator (slice differentiator, SD), etc.
3. A UE route selection policy (UE route selection policy, URSP) refers to information describing a corresponding relationship between an application and a network slice. The URSP may include one or more pieces of single network slice selection assistance information (single network slice selection assistance information, S-NSSAI), etc., so as to implement differentiated control policies for different services of different users.

Optionally, the URSP includes two types of parameters. One type of parameter is a traffic descriptor (traffic descriptor, TD) parameter for describing APP attributes. The TD parameter includes one or more of the following: an APP ID, a data network name (data network name, DNN), an IP descriptor (IP Descriptor), a domain descriptor (domain descriptor), or connection capabilities (connection capabilities). The other type of parameter is a route selection descriptor for describing data bearer attributes. The route selection descriptor includes one or more of the following parameters: single network slice selection assistance information, a session and service continuity mode (session and service continuity mode, SSC mode), a DNN, etc. A corresponding relationship may exist between the traffic descriptor and the route selection descriptor.

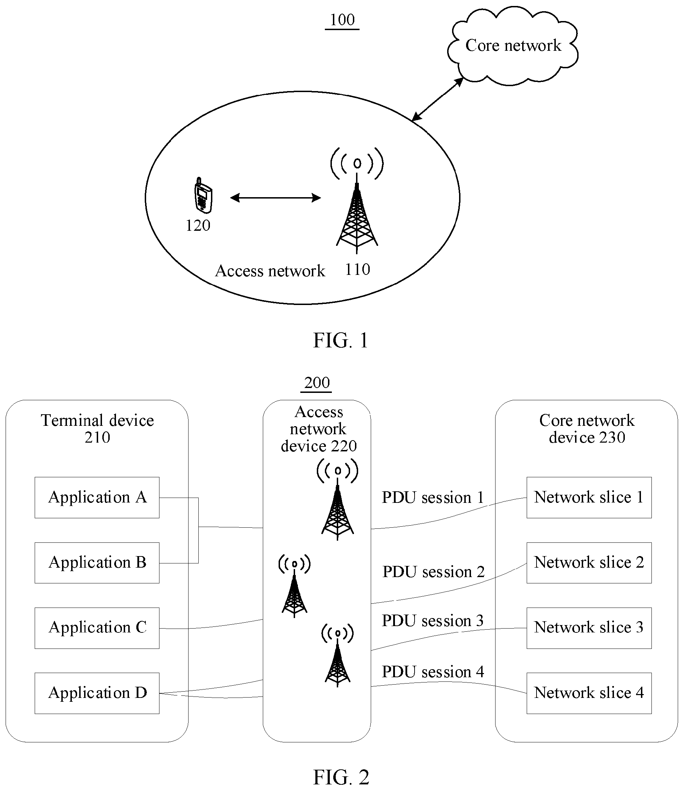

For ease of understanding of embodiments of this application, a communication system applicable to embodiments of this application is first described in detail with reference to FIG. 1.

FIG. 1 shows a schematic diagram of a communication system 100 to which an embodiment of this application is applicable. The communication system 100 includes an access network and a core network.

The access network includes at least one access network device, such as an access network device 110 shown in FIG. 1. The access network further includes at least one terminal device, such as a terminal device 120 shown in FIG. 1. A core network device in the core network may be connected to the access network device in a wireless or wired manner. When the terminal device is within the coverage of the access network device, the terminal device may be connected to the access network device in a wireless manner. For example, when the terminal device 120 is within the coverage of the access network device 110, the terminal device 120 may be connected to the access network device 110 in a wireless manner.

The access network device 110 and the terminal device 120 may communicate with each other through a wireless link. The access network device 110 or the terminal device 120 may be configured with a plurality of antennas. The plurality of antennas may include at least one transmit antenna for sending a signal and at least one receive antenna for receiving a signal. In addition, the access network device 110 or the terminal device 120 further additionally includes a transmitter chain and a receiver chain. A person of ordinary skill in the art may understand that both the transmitter chain and the receiver chain may include a plurality of components (e.g., a processor, a modulator, a multiplexer, a demodulator, a demultiplexer, or an antenna) related to signal sending and signal receiving. Therefore, the access network device 110 and the terminal device 120 may communicate with each other through a multi-antenna technology.

In addition, the access network device 110 may alternatively communicate with the core network device in the core network through a wireless link. Therefore, the terminal device 120 may communicate with the core network device through the access network device 110. By way of example, the terminal device 120 may send information 1 to the access network device 110, and correspondingly, the access network device 110 receives information 1 from the terminal device 120. The access network device 110 then sends information 1 to the core network device, and correspondingly, the core network device receives information 1 from the access network device 110. Alternatively, the core network device sends information 2 to the access network device 110, and correspondingly, the access network device 110 receives information 2 from the core network device. The access network device 110 then sends information 2 to the terminal device 120, and correspondingly, the terminal device 120 receives information 2 from the access network device 110.

The main functions of the core network are to provide user connection, user management, and service bearer, and to serve as a bearer network to provide an interface to an external network. The establishment of user connection includes functions such as mobility management (MM), call management (CM), switching/routing, and announcement recording (which completes the connection to intelligent network peripheral devices in combination with intelligent network services).

It should be understood that a core network of a 4G network is an evolved packet core (evolved packet core, EPC) network. The EPC network is a core network of a 4G mobile communication network. The network falls within the scope of the core network, has the traditional capabilities of mobile networks such as user subscription data storage, mobility management, and data switching, and can provide users with an ultra-high-speed Internet access experience. A core network of a 5G network is a 5G Core (abbreviated as 5GC). The 5GC uses general network function virtualization devices to replace dedicated communication devices of the 4G network.

It should be noted that a core network in a network architecture shown in FIG. 1 may be obtained by the convergence of the EPC and the 5GC. To be specific, the core network in the network architecture may include both network elements in the EPC and network elements in the 5GC. For example, the core network in the network architecture may include an access and mobility management function (access and mobility management function, AMF) network element, a policy control function (policy control function, PCF) network element, a mobility management entity (mobility management entity, MME) network element, a serving gate way (serving gate way, SGW) network element, a packet data network gate way (packet data network gate way, PGW) network element, a session management function (session management function, SMF) network element, a user plane function (user plane function, UPF) network element, a unified data management (unified data management, UDM) network element, and a home subscriber server (home subscriber server, HSS) network element, etc.

In some embodiments of this application, the core network in the network architecture may include a converged network element derived from the network elements in the EPC and the 5GC, such as SMF+PGW-C, UPF+PGW-U, or UDM+HSS. PGW-C is a control plane node of the PGW network element, and PGW-U is a user plane node of the PGW network element.

Each network element in the core network may alternatively be referred to as a functional entity, which may be a network element implemented on dedicated hardware, a software instance running on dedicated hardware, or an instance of virtualized functions on an appropriate platform.

It should be understood that the core network device and the access network device may be independent and separate physical devices. Alternatively, the functions of the core network device and the logical functions of the radio access network device may be integrated into the same physical device. Alternatively, part of the functions of the core network device and part of the functions of the access network device may be integrated into a single physical device. This is not specifically limited in this application.

It should be understood that the names of all network elements in this application are merely examples. In future communications, such as 6G, the network elements may be referred to by other names. Alternatively, in future communications, such as 6G, the network elements involved in this application may be replaced by other entities or devices with the same functions. This is not limited in this application. This is a unified explanation herein and will not be repeated hereinafter. Optionally, the network elements in embodiments of this application may be communication devices, or chips or chip systems used in the communication devices, etc. This is not limited in this application.

It should be understood that the core network in the network architecture shown in FIG. 1 may further include other devices, network elements, network entities, or network subsystems, such as a policy control function (policy control function, PCF) network element. This is not limited in this application. It should be noted that this application does not limit the distribution mode of the network elements in the core network. For the distribution mode, reference may be made to relevant technical documents. This is not elaborated in this application.

It should be understood that FIG. 1 is only a schematic diagram, and this application does not limit the specific architecture of the applicable system. The communication system 100 may further include other network devices, such as a wireless relay device and a wireless backhaul device, which are not shown in FIG. 1. Embodiments of this application do not limit the quantity and specific form of the core network device, the access network device, and the terminal device included in the communication system 100.

Optionally, the foregoing communication system 100 may further include other network entities such as a network controller and a mobility management entity. This is not limited in embodiments of this application.

Currently, the types of terminal devices and services provided by the terminal devices are increasing. For different types of services, if the same network is adopted to provide services, it will be difficult to meet diversified service requirements of the terminal devices. For example, for cloud game applications in the terminal devices, a server needs to send real-time audio and video streams to a client. The client needs to send control command streams to the server, and the server applies the received control commands from the client to a game. Therefore, the services of the cloud game applications have high requirements for network latency and bandwidth. For weather applications in the terminal devices, the latency requirement is usually much lower than that of the cloud game applications. As another example, for a virtual reality (virtual reality, VR) terminal device, high latency may cause motion sickness (motion sickness) in a user, and the latency requirement for this type of terminal device is usually within 20 ms.

Based on this, a plurality of virtual end-to-end networks may be separated on a unified core network infrastructure by using a network slicing technology, where each virtual end-to-end network may be referred to as a network slice. Each network slice can meet specific service requirements, such as latency, jitter, packet loss rate, and bandwidth within specific ranges. Through network slicing, a communication system may provide different service bearing capabilities for different types of services of the terminal device, such as services of cloud game applications and weather applications, thereby meeting diversified requirements of different services of the terminal device. In this way, the flexibility and service adaptability of the network architecture can be improved.

Applicable scenarios of network slicing will be described below with reference to FIG. 2.

FIG. 2 is a schematic diagram of an application scenario of network slicing according to an embodiment of this application. As shown in FIG. 2, a scenario 200 includes a terminal device 210, an access network device 220, and a core network device 230. The terminal device 210 may communicate with the core network device 230 through the access network device 220.

A plurality of applications may run in the terminal device 210, such as application A, application B, application C, and application D shown in FIG. 2. The core network device 230 may provide a plurality of network slices, such as network slice 1, network slice 2, network slice 3, and network slice 4 shown in FIG. 2. The applications in the terminal device 210 may access different network slices, so that the network slices may serve the services of different applications.

By way of example, when the terminal device 210 runs an application, a protocol data unit (protocol data unit, PDU) session of a network slice corresponding to the application is first established by the access network device 220, and then service data is transmitted to the core network device 230 by using the PDU session.

It should be noted that one application may correspond to one or more network slices, and one network slice may correspond to one or more applications. Each network slice corresponds to one PDU session.

As shown in FIG. 2, application A and application B may be connected to network slice 1 through PDU session 1, so that network slice 1 serves the services of application A and application B. Application C may be connected to network slice 2 through PDU session 2, so that network slice 2 serves the service of application C. Application D may be connected to network slice 3 through PDU session 3 and also to network slice 4 through PDU session 4, so that network slice 3 and network slice 4 serves the service of Application D.

In the process of using a network slicing technology, the core network device usually indicates the terminal device to enable a network slice through the access network device. In other words, when the terminal device runs an application, the application is served by using a network slice corresponding to the running application. However, the current network slice scheduling mode of the core network device is relatively single. Usually, only an indication is sent to the terminal device to enable a network slice, leading to improper allocation of network resources and waste of network resources. By way of example, it is assumed that the core network device indicates the terminal device to enable a network slice. It is assumed that the current network load is high. If a large number of applications with high bandwidth requirements continue to request the core network device to use network slices, available network resources of the network slices serving other applications may be further reduced, affecting the running of the other applications.

To resolve the foregoing technical problem, this application provides a data transmission method and apparatus. A core network device may disable or enable a particular type of network slice through a network load, a core network device load, etc. For example, when the network load is high, a network slice corresponding to an application with high bandwidth and latency requirements may be disabled. When the network load is low, all network slices may be enabled. Alternatively, when uplink data transmission is congested, a network slice for uplink data transmission may be disabled. In this way, the core network device may more rationally indicate a terminal device to enable or disable a particular type of network slice through an access network device based on the network status, the core network device load, etc., so that the core network device can schedule network slices more rationally, thereby helping to improve the utilization rate of network resources.

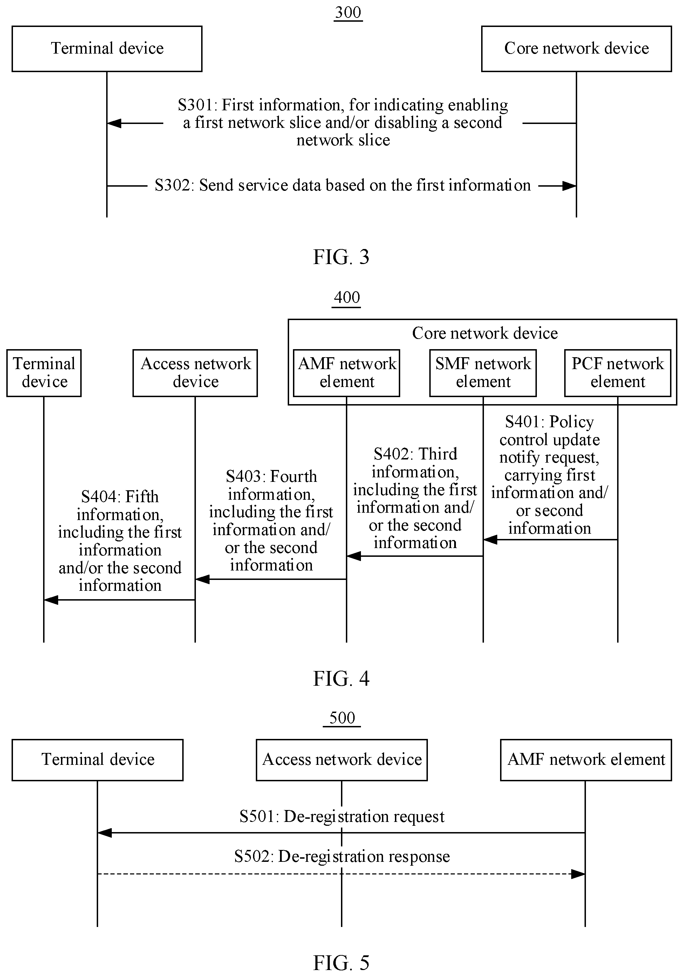

The data transmission method of this application will be described below in detail with reference to FIG. 3 to FIG. 6. Embodiments shown in this application illustrate the data transmission method provided by this application from the perspective of device interaction. The specific form and quantity of the devices shown are merely examples, and shall not constitute any limitation on the implementation of the method provided by this application. The data transmission method according to embodiments of this application will be described below in detail by taking a terminal device, an access network device, and a core network device as execution entities.

It should be understood that the terminal device may be a terminal device body, a chip, a chip system or a processor that supports the terminal device to implement the data transmission method, or a logical module or software that can implement all or part of the functions of the terminal device. The access network device may be an access network device body, a chip, a chip system or a processor that supports the access network device to implement the data transmission method, or a logical module or software that can implement all or part of the functions of the access network device. The core network device may be a core network device body, a chip, a chip system or a processor that supports the core network device to implement the data transmission method, or a logical module or software that can implement all or part of the functions of the core network device. This is not specifically limited in this application.

It should be noted that in embodiments of this application, all information interactions between the terminal device and the core network device may be implemented through the access network device. To make the description more concise, the process of the access network device forwarding signaling during the signaling interaction between the terminal device and the core network device will not be described in detail hereinafter.

FIG. 3 is a schematic flowchart of a data transmission method 300 according to an embodiment of this application. The method 300 may be applied to a system 100. As shown in FIG. 3, the method 300 includes the following steps:

S301: A core network device sends first information to a terminal device when a preset condition is satisfied, where the first information is configured for indicating enabling a first network slice and/or disabling a second network slice, and the preset condition is related to a load and/or a network status of the core network device. Correspondingly, the terminal device receives the first information from the core network device.

It should be understood that the first network slice may include one or more network slices and the second network slice may include one or more network slices. The first network slice and/or the second network slice may alternatively refer to all types of network slices. The load of the core network device may include, for example, an occupation rate of processor resources and/or an occupation rate of memory resources. The network status may include, for example, one or more of the following: a network resource occupancy rate, a ratio of the number of users accessing the second network slice to a saturation value, a disconnection rate of terminal devices not accessing the second network slice, a packet loss rate of terminal devices not accessing the second network slice, or a network latency of terminal devices not accessing the second network slice. The saturation value may be understood as a maximum number of users that can access the second network slice. The number of users may be understood as the quantity of terminal devices.

In addition, the network status may further include network security and the like.

The enabling and disabling may be indicated in the following manners.

Manner 1: The first information may include a first identifier and/or a second identifier, where the first identifier indicates enabling and the second identifier indicates disabling. By way of example, the first identifier is 1 and the second identifier is 0, or the first identifier is 0 and the second identifier is 1. Alternatively, the first identifier is true and the second identifier is false, or the first identifier is false and the second identifier is true. Alternatively, the first identifier is true and the second identifier is false, and the first identifier is activate and the second identifier is deactivate. Alternatively, the first identifier is enable and the second identifier is de-enable.

Manner 2: The first information may include a third identifier, where the third identifier indicates enabling, and the absence of the third identifier in the first information indicates disabling. Alternatively, the first information may include a fourth identifier, where the fourth identifier indicates disabling, and the absence of the fourth identifier in the first information indicates enabling. The third identifier may be, for example, one of the following: 0, 1, true, false, activate, or enable. The fourth identifier may be, for example, one of the following: 0, 1, true, false, deactivate, de-enable, or default.

Optionally, default may indicate that all service data is transmitted through a default PDU session. To be specific, all network slices are disabled.

The first information may indicate enabling the first network slice and/or disabling the second network slice in the following manners.

In the first manner, the first information includes the identifiers in Manner 1 or Manner 2 for indicating enabling and disabling, and the first information indicates enabling or disabling all types of network slices. By way of example, the first information includes default, indicating that all types of network slices are disabled. Alternatively, the first information includes identifier 1 indicating enabling, indicating that all types of network slices are enabled.

In the second manner, the first information includes the identifiers in Manner 1 or Manner 2 for indicating enabling and disabling, and further includes information for indicating the first network slice and/or information for indicating the second network slice.

In an example, combined with Manner 1 for indicating enabling and disabling, the first information includes the first identifier, information for indicating the first network slice, the second identifier, and information for indicating the second network slice. For example, the first information includes 1 and A, as well as 0 and B. Then, the first information indicates enabling a network slice indicated by A and disabling a network slice indicated by B.

In another example, combined with Manner 2 for indicating enabling and disabling, the first information includes the third identifier, information for indicating the first network slice, and information for indicating the second network slice. For example, the first information includes 1 and A, as well as B. Then, the first information indicates enabling a network slice indicated by A and disabling a network slice indicated by B.

In yet another example, combined with Manner 2 for indicating enabling and disabling, the first information includes information for indicating the first network slice, the fourth identifier, and information for indicating the second network slice. For example, the first information includes A, as well as default and B. Then, the first information indicates enabling a network slice indicated by A and disabling a network slice indicated by B.

S302: The terminal device sends service data to the core network device based on the first information. Correspondingly, the core network device receives service data from the terminal device.

The service data may be data generated when an application installed in the terminal device runs, such as a music application or a game application.

After the terminal device receives the first information, if the first information is configured for indicating enabling the first network slice, for an application corresponding to the first network slice, when the terminal device starts the application corresponding to the first network slice or the terminal device is running the application corresponding to the first network slice, the terminal device sends a PDU session establishment request to the core network device, where the PDU session establishment request carries information for indicating the first network slice. The core network device sends a PDU session establishment response to the terminal device, and then the terminal device may use the PDU session corresponding to the first network slice to send data generated by running of the application corresponding to the first network slice to the core network device.

And/or, after the terminal device receives the first information, if the first information is configured for indicating disabling the second network slice, for an application corresponding to the second network slice, when the terminal device starts the application corresponding to the second network slice, the terminal device uses a default PDU session (default PDU session) to send data generated by running of the application corresponding to the second network slice to the core network device. Alternatively, if the terminal device is running the application corresponding to the second network slice, the terminal device disables the second network slice, i.e., uses the default PDU session to send data generated by running of the application corresponding to the second network slice to the core network device.

The default PDU session may alternatively be understood as a PDU session corresponding to a default slice (default slice). The default PDU session refers to a default PDU session used by the terminal device to transmit data generated by running of the application on the terminal device when the terminal device does not use a network slicing technology, i.e., when the network slices are disabled. The PDU session is not a dedicated PDU session for a particular type of application, but a PDU session that may be used by some or all applications, and may alternatively be referred to as a common PDU session or the like.

In the data transmission method of this application, the core network device may enable the first network slice and/or disable the second network slice based on a network load, etc. For example, when the network load is high, a network slice corresponding to an application with high bandwidth and latency requirements may be disabled, and/or an application with low bandwidth and latency requirements may be enabled. When the load of the core network device is high, for example, when a memory occupancy rate is excessively high, all network slices may be disabled. In this way, the core network device may more rationally indicate the terminal device to enable or disable a particular type of network slice through an access network device based on the network status, the core network device load, etc., so that the core network device can schedule network slices more rationally, thereby helping to improve the utilization rate of network resources.

The preset condition in S301 is described below.

In the first case, the first information is configured for indicating disabling the second network slice The preset condition may include one or more of the following: an occupancy rate of processor resources is greater than or equal to a first preset threshold; an occupancy rate of memory resources is greater than or equal to a second preset threshold; an occupancy rate of network resources is greater than or equal to a third preset threshold; a ratio of the number of users accessing the second network slice to a saturation value is greater than or equal to a fourth preset threshold; a disconnection rate of terminal devices not accessing the second network slice is greater than or equal to a fifth preset threshold; a packet loss rate of terminal devices not accessing the second network slice is greater than or equal to a sixth preset threshold; or a network latency of terminal devices not accessing the second network slice is greater than or equal to a seventh preset threshold.

The first preset threshold, the second preset threshold, the third preset threshold, the fourth preset threshold, the fifth preset threshold, the sixth preset threshold, and the seventh preset threshold are all preset positive values, such as 80%.

When the load of the core network device is high, for example, when the occupancy rate of processor resources and/or the occupancy rate of memory resources of the core network device is high, the core network device may indicate disabling all network slices or part of the network slices.

When the load of network resources is high, for example, when the occupancy rate of network resources is high, the core network device may indicate disabling part or all of the network slices, for example, disabling network slices corresponding to game applications with high latency and bandwidth requirements. Therefore, excessive concentration of network resources on serving an application corresponding to the second network slice is prevented, helping to balance the distribution of network resources, so that the core network device schedules network resources more rationally.

When the ratio of the number of users accessing the second network slice to the saturation value is excessively high, a large number of network resources may be concentrated on the second network slice. Alternatively, the second network slice may have poor network security conditions. Therefore, the core network device may indicate disabling the second network slice. On the one hand, excessive concentration of network resources on serving the application corresponding to the second network slice is prevented, helping to balance the distribution of network resources. On the other hand, if the second network slice is to serve a bank application with high network security requirements, the second network slice may be disabled when the second network slice has poor network security conditions, thereby reducing the risk of the bank application being attacked due to the network security vulnerabilities of the second network slice.

When the disconnection rate, packet loss rate, and/or network latency of terminal devices not accessing the second network slice are high, it indicates that network resources may be excessively concentrated on serving the application corresponding to the second network slice. As a result, fewer network resources are available for terminal devices not accessing the second network slice, making it difficult to meet the requirements of terminal devices not accessing the second network slice. Therefore, the core network device may disable the second network slice, thereby preventing excessive concentration of network resources on serving the application corresponding to the second network slice, helping to balance the distribution of network resources.

Optionally, the occupancy rate of network resources may alternatively refer to an occupancy rate of uplink network resources or an occupancy rate of downlink network resources. For example, when the occupancy rate of uplink network resources is greater than or equal to the third preset threshold, the second network slice may include an uplink network slice. When the occupancy rate of downlink network resources is greater than or equal to the third preset threshold, the second network slice may include a downlink network slice.

In a possible implementation, the method 300 further includes: sending, by terminal devices not accessing the second network slice, information for indicating network data to the core network device, where the network data includes one or more of the following: a disconnection rate, a packet loss rate, or a network latency. Correspondingly, the core network device receives, from terminal devices not accessing the second network slice, information for indicating network data.

It should be understood that the foregoing disconnection rate, packet loss rate, and network latency of terminal devices not accessing the second network slice may be obtained by the core network device from terminal devices not accessing the second network slice. Optionally, the core network device may send request 1 for requesting network data to terminal devices not accessing the second network slice. In response to request 1, the terminal device sends information for indicating the network data to the core network device.

In the second case, the first information is configured for indicating enabling the first network slice, and the preset condition includes one or more of the following: an occupancy rate of processor resources is less than or equal to an eighth preset threshold; an occupancy rate of memory resources is less than or equal to a ninth preset threshold; or an occupancy rate of network resources is less than or equal to a tenth preset threshold.

The eighth preset threshold, the ninth preset threshold, and the tenth preset threshold are all preset positive values, such as 60%.

When the load of the core network device is low and/or the load of network resources is low, the core network device may indicate enabling the first network slice. The first network slice may refer to all or part of the network slices, and may be applicable to, for example, a game application or a video-audio application.

Optionally, the occupancy rate of network resources may alternatively refer to an occupancy rate of uplink network resources or an occupancy rate of downlink network resources. For example, when the occupancy rate of uplink network resources is less than or equal to the tenth preset threshold, the first network slice may include an uplink network slice. When the occupancy rate of downlink network resources is less than or equal to the tenth preset threshold, the first network slice may include a downlink network slice.

In the third case, the first case and the second case may be executed in parallel. For example, the first information is configured for indicating enabling the first network slice and disabling the second network slice.

For example, when the core network device determines that the current load of the core network device is low, the load of uplink network resources is low, and the disconnection rate, packet loss rate, and network latency of terminal devices not accessing the second network slice are high, the core network device may indicate enabling the first network slice and disabling the second network slice. The first network slice may be, for example, an uplink network slice. The second network slice may be, for example, a downlink network slice.

It should be understood that for the third case, reference may be made to the descriptions of the first case and the second case. Details are not enumerated herein.

As an optional embodiment, the method 300 further includes: The terminal device sends a third request for requesting to enable the first network slice and/or disable the second network slice to the core network device. Correspondingly, the core network device receives the third request. S301 may be implemented in the following manner: In response to the third request, the core network device sends the first information to the terminal device.

By way of example, when a game application is running on the terminal device but the network latency of the game application is high, user experience is poor. In this case, the terminal device may send a third request to the core network device, where the third request is configured for requesting to enable a network slice corresponding to the game application. Alternatively, when a network slice corresponding to a download application is enabled, if the terminal device experiences an excessively low download speed when using the download application to download files, the terminal device may send a third request to the core network device, where the third request is configured for requesting to disable the network slice corresponding to the download application. It can be seen that in this manner, the terminal device may request the core network device to enable or disable a network slice according to user requirements, thereby improving user experience.

As an optional embodiment, the first network slice and/or the second network slice may include, but is not limited to, one or more of the following: an uplink network slice, a downlink network slice, a network slice serving a first application, a network slice with a bandwidth greater than or equal to a first threshold, or a network slice with a bandwidth less than or equal to a second threshold.

The uplink network slice may be understood as a network slice serving data for uplink transmission. The downlink network slice may be understood as a network slice serving data for downlink transmission. The first application may refer to one or more applications, or one or more types of applications. The first threshold and the second threshold may be preset positive values.

Optionally, the first network slice and/or the second network slice may be defined by protocol or configured by the core network device through signaling.

When the first network slice and/or the second network slice are defined by protocol, the first information may indicate disabling and/or enabling, and the terminal device may correspondingly use the first network slice and/or disable the second network slice. By way of example, if the second network slice is a network slice with bandwidth greater than or equal to the first threshold and the first network slice is a network slice with bandwidth less than or equal to the second threshold, the core network device may send the first information to the terminal device in case of network congestion. After receiving the first information, the terminal device may use the network slice with bandwidth less than or equal to the second threshold and/or not use the network slice with bandwidth greater than or equal to the first threshold.

When the first network slice and/or the second network slice are configured by the core network device through signaling, the method 300 further includes: The core network device sends second information to the terminal device, where the second information is configured for indicating the first network slice and/or the second network slice. Correspondingly, the terminal device receives the second information.

It should be understood that the first information and the second information may be sent through the same signaling or different signaling. When the first information and the second information are sent through the same signaling, the first information and the second information may be carried in the same or different fields, or the first information and the second information may be carried in the same or different information elements. This is not specifically limited in this application.

The second information may indicate the first network slice and/or the second network slice in the following manners.

When the first network slice or the second network slice includes an uplink network slice, the second information may include a first preset identifier, where the first preset identifier represents the uplink network slice. The first preset identifier may be, for example, up, 0, 1, or 11.

When the first network slice or the second network slice includes a downlink network slice, the second information may include a second preset identifier, where the second preset identifier represents an uplink network slice. The second preset identifier may be, for example, down, 0, 1, or 00.

When the first network slice or the second network slice includes a network slice serving the first application, the second information may include a third preset identifier, where the third preset identifier represents the network slice serving the first application. The third preset identifier may be, for example, bank, where bank represents a network slice serving a bank application. Alternatively, the third preset identifier may be 00 and 11, where 00 represents a network slice serving a music application, and 11 represents a network slice serving a game application. Alternatively, the second information may use a bit map to represent the first application. For example, 1 represents selection and 0 represents non-selection. The second information may include 1100, where 1100 may represent that the first application includes application A and application B.

When the first network slice or the second network slice includes a network slice with bandwidth greater than or equal to the first threshold, the second information may include a fourth preset identifier. The fourth preset identifier represents the network slice with bandwidth greater than or equal to the first threshold. The fourth preset identifier may be, for example, the first threshold, 0, or 1.

When the first network slice or the second network slice includes a network slice with bandwidth less than or equal to the second threshold, the second information may include a fifth preset identifier. The fifth preset identifier represents the network slice with bandwidth less than or equal to the second threshold. The fifth preset identifier may be, for example, the second threshold, 0, or 1.

As an optional embodiment, the first information and/or the second information satisfies any one of the following: the first information is broadcast; or the first information is carried in a first request, where the first request is configured for requesting to modify a session; or the first information is carried in a second request, where the second request is configured for requesting to de-register a session.
1. The first information and/or the second information is broadcast. That the first information is broadcast may be understood as that the first information is broadcast by the access network device under the indication of the core network device. In this way, the terminal device within the coverage of the access network device may obtain the first information and/or the second information.
2. The first information and/or the second information is carried in a first request. The first request may be a policy control update notify request (policy contro update notify request). The policy control update notify request may be a request sent by the PCF network element to the SMF network element for providing, updating, or deleting policies related to PDU sessions and policy and charging control (policy and charging control, PCC) rules.

In this case, the core network device may indicate the first information and/or the second information to the terminal device by using the method 400 as shown in FIG. 4. The method 400 includes the following steps:

S401: The PCF network element sends a policy control update notify request to the SMF network element, where the policy control update notify request carries first information and/or second information. Correspondingly, the SMF network element receives the policy control update notify request.

S402: The SMF network element sends third information to the AMF network element, where the third information includes the first information and/or the second information. Correspondingly, the AMF network element receives the third information, where the third information is information sent by the SMF network element to the AMF network element in response to the policy control update notify request. By way of example, the third information may be a PDU session update SM context response (PDU session update SM context response), or a PDU session release SM context response (PDU session release SM context response), or an N1 N2 message transfer (N1 N2 message transfer), etc. The N2 message may be a message carrying information such as a PDU session ID and SM information.

S403: The AMF network element sends fourth information to the access network device, where the fourth information includes the first information and the second information. Correspondingly, the access network device receives the fourth information. The fourth information is information sent by the AMF network element to the access network device in response to the third information. By way of example, the fourth information may be an N2 resource release request (N2 resource release request), etc.

S404: The access network device sends fifth information to the terminal device, where the fifth information includes the first information and the second information. Correspondingly, the terminal device receives the fifth information. The fifth information is information sent by the access network device to the terminal device in response to the fourth information. By way of example, the fifth information may be specific resource modification (specific resource modification) information, e.g., a PDU session modification command (PDU session modification command).

It should be noted that the method 400 may be a PDU session release signaling process triggered by the core network device when determining that preset conditions are satisfied, or it may be understood as a PDU session update process or a PDU session modification process. The first information and/or the second information is sent in the signaling carried in this process. The signaling involved in this process or the signaling for carrying the first information and/or the second information are not specifically limited in this application.

3. The first information and/or the second information is carried in a second request. The second request may be a de-registration request (de-registration request).

In this case, the core network device may indicate the first information and/or the second information to the terminal device by using the method 500 as shown in FIG. 5. The method 500 includes the following steps:

S501: The AMF network element sends a de-registration request to the terminal device through the access network device. The de-registration request carries first information and/or second information. Correspondingly, the terminal device receives the de-registration request. The AMF network element is a type of core network device.

Optionally, the terminal device may further perform S502. The terminal device sends a de-registration accept (de-registration accept) message to the AMF network element through the access network device.

It should be noted that the method 500 may be a de-registration process triggered by the core network device when determining that preset conditions are satisfied. The first information and/or the second information is sent in the signaling carried in this process. The signaling involved in this process or the signaling for carrying the first information and/or the second information are not specifically limited in this application.

As an optional embodiment, the first information is configured for indicating enabling the first network slice. S302 may be implemented in the following manners: sending the service data to the core network device by using a first PDU session corresponding to the first network slice, where the service data is data generated by running of a first application, and the first network slice is matched with the first application.

It should be understood that the first application may be, for example, a game application, a bank application, a music application, etc. That the first network slice is matched with the first application may be understood as that the URSP includes a corresponding relationship between a traffic descriptor corresponding to the first application and a route selection descriptor corresponding to the first network slice. Different traffic descriptors included in the URSP may correspond to different route selection descriptors. To be specific, different network quality of service may be provided for different applications. For example, when a game application accesses the network, the network slice with the lowest latency may be matched for the game application. When a download application accesses the network, the network slice with the maximum bandwidth and the highest average network speed may be matched for the download application. When a bank application accesses the network, the network slice with the highest network security may be matched for the bank application.

For the examples shown in the method 400 and the method 500, if the first information carried in the first request or the second request is configured for indicating enabling the first network slice, the terminal device may continue to perform the implementation of S302.

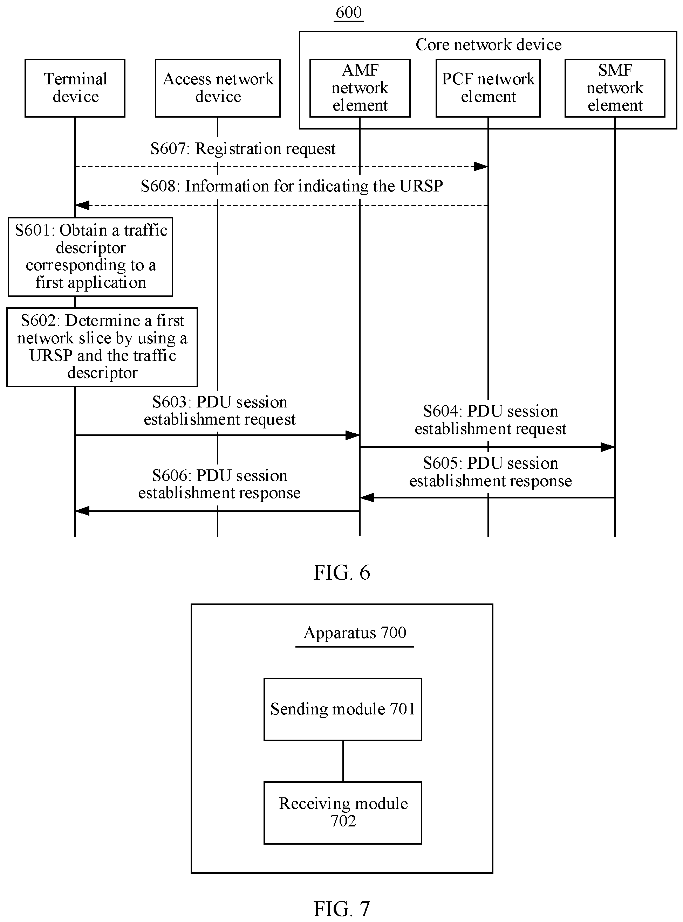

In a possible implementation, the first PDU session may be established by using a method 600 as shown in FIG. 6. To be specific, before sending service data to the core network device by using the first PDU session corresponding to the first network slice, the terminal device may first establish the first PDU session by using the method 600.

S601: The terminal device obtains a traffic descriptor corresponding to a first application.

S602: The terminal device determines a first network slice by using a URSP and the traffic descriptor. The URSP may include the traffic descriptor and a route selection descriptor for indicating the first network slice.

S603: The terminal device sends a PDU session establishment request to the AMF network element through the access network device, where the PDU session establishment request carries the route selection descriptor for indicating the first network slice. Correspondingly, the AMF network element receives the PDU session establishment request.

S604: The AMF network element sends a PDU session establishment request to the SMF network element, where the PDU session establishment request carries the route selection descriptor for indicating the first network slice. Correspondingly, the SMF network element receives the PDU session establishment request.

It should be understood that the route selection descriptor for indicating the first network slice may alternatively be understood as information for describing the attributes of the first PDU session. Based on the route selection descriptor for indicating the first network slice, the core network device may create the first PDU session.

S605: The SMF network element sends a PDU session establishment response to the AMF network element, where the PDU session establishment response is configured for indicating that a PDU session is successfully established. Correspondingly, the AMF network element receives the PDU session establishment response.

S606: The AMF network element sends a PDU session establishment response to the terminal device through the access network device, where the PDU session establishment response is configured for indicating that a PDU session is successfully established. Correspondingly, the terminal device receives the PDU session establishment response.

Based on the PDU session establishment response, the terminal device may determine that the first PDU session is successfully established, and then may transmit a data flow of the first application through the first PDU session.

Optionally, before S601, the method 600 further includes S607: The terminal device sends a registration request to the PCF network element through the access network device and the AMF network element in sequence to request obtaining a URSP. In response to the registration request, the PCF network element sends information for indicating the URSP to the terminal device through the AMF network element and the access network device in sequence. In this way, the terminal device may obtain the URSP from the core network device, facilitating the terminal device to match network slices for applications running on the terminal device. In this case, assuming that the first information is configured for indicating enabling the first network slice and the second information is configured for indicating that the first network slice is a network slice corresponding to a game application, the terminal device may establish a PDU session for transmitting a data flow generated by running of the game application using the method 600 when running the game application.

As an optional embodiment, the first information is configured for indicating disabling the second network slice. S302 may be implemented in the following manners: transmitting the service data through a second PDU session. The second PDU session is a default PDU session.

It should be understood that the default PDU session may refer to the description above, and details are not described herein again. It is assumed that the service data is data generated by running of a second application matched with the second network slice, and the second network slice corresponds to a third PDU session. When the first information is configured for indicating disabling the second network slice, the terminal device does not use the third PDU session to transmit the service data, but uses a default PDU session to transmit the service data.

If the terminal device uses the third PDU session to transmit the service data before receiving the first information, after receiving the first information, the terminal device may delete resource information corresponding to the third PDU session, such as a third PDU session ID, and transmit the service data through the default PDU session.

It should be noted that the default PDU session may be a pre-established PDU session. Alternatively, if the default PDU session is not established, the terminal device may establish the default PDU session by using the manner of S603 to S606, and details are not described herein again for the sake of brevity.

It should also be noted that in embodiments of this application, enabling or disabling a network slice may be replaced with activating or deactivating a network slice, or enabling or disabling a network slice. This is not specifically limited in this application.

It should be understood that the sequence number of the methods does not mean the sequence of execution, the sequence of execution of each process should be determined by functions and internal logic.

It should also be understood that in some possible implementations, the PDU session in embodiments of this application may be replaced with other sessions, such as a packet data network (packet data network, PDN) session. This is not specifically limited in this application.

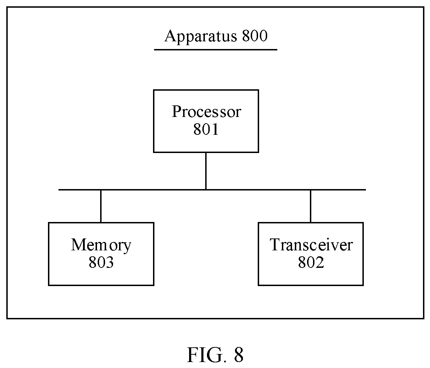

The data transmission method according to an embodiment of this application has been described in detail above with reference to FIG. 3 to FIG. 6. A data transmission apparatus according to an embodiment of this application will be described below in detail with reference to FIG. 7 and FIG. 8. The data transmission apparatus includes modules or units configured to execute the corresponding parts in the foregoing embodiments. The modules or units may be software, hardware, or a combination of software and hardware. Only a brief example of the data transmission apparatus is provided below. For details about the implementation details of the solution, reference may be made to the description of the foregoing method embodiments, and details are not described herein again.

FIG. 7 is a schematic block diagram of a data transmission apparatus 700 according to an embodiment of this application. As shown in FIG. 7, the apparatus 700 includes: a sending module 701 and a receiving module 702.

In a possible implementation, the apparatus 700 is configured to implement steps corresponding to core network devices (an AMF network element, an SMF network element, and a PCF network element) in the foregoing method 300, method 400, method 500, and method 600.

The sending module 701 is configured to send first information to a terminal device when it is determined that a preset condition is satisfied, where the first information is configured for indicating enabling a first network slice and/or disabling a second network slice, and the preset condition is related to a load and/or a network status of the core network device. The receiving module 702 is configured to receive service data from the terminal device based on the first information.

Optionally, the first information is configured for indicating disabling the second network slice, and the preset condition includes one or more of the following: an occupancy rate of processor resources is greater than or equal to a first preset threshold; an occupancy rate of memory resources is greater than or equal to a second preset threshold; an occupancy rate of network resources is greater than or equal to a third preset threshold; a ratio of the number of users accessing the second network slice to a saturation value is greater than or equal to a fourth preset threshold; a disconnection rate of terminal devices not accessing the second network slice is greater than or equal to a fifth preset threshold; a packet loss rate of terminal devices not accessing the second network slice is greater than or equal to a sixth preset threshold; or a network latency of terminal devices not accessing the second network slice is greater than or equal to a seventh preset threshold.

Optionally, the receiving module 702 is further configured to: receive, from terminal devices not accessing the second network slice, information for indicating network data, where the network data includes one or more of the following: a disconnection rate, a packet loss rate, or a network latency.

Optionally, the first information is configured for indicating enabling the first network slice, and the preset condition includes one or more of the following: an occupancy rate of processor resources is less than or equal to an eighth preset threshold; an occupancy rate of memory resources is less than or equal to a ninth preset threshold; or an occupancy rate of network resources is less than or equal to a tenth preset threshold.

Optionally, the first network slice and/or the second network slice is one or more of the following: an uplink network slice, a downlink network slice, a network slice serving a first application, a network slice with a bandwidth greater than or equal to a first threshold, or a network slice with a bandwidth less than or equal to a second threshold.

Optionally, the sending module 701 is further configured to: send second information to the terminal device, where the second information is configured for indicating the first network slice and/or the second network slice.

Optionally, the first information and/or the second information satisfies one of the following: the first information is broadcast; or the first information is carried in a first request, where the first request is configured for requesting to modify a session; or the first information is carried in a second request, where the second request is configured for requesting to de-register a session.

Optionally, the receiving module 702 is further configured to: receive a third request from the terminal device, where the third request is configured for requesting to enable the first network slice and/or disable the second network slice. The sending module 701 is specifically configured to: send the first information to the terminal device in response to the third request.

Optionally, the first information is configured for indicating enabling the first network slice. The service data is data generated by running of a first application. The service data is transmitted through a first PDU session corresponding to the first network slice. The first network slice is matched with the first application.

Optionally, the first information is configured for indicating disabling the second network slice. The service data is transmitted through a second PDU session. The second PDU session is a default PDU session.

In another possible implementation, the apparatus 700 is configured to implement steps corresponding to terminal devices in the foregoing method 300, method 400, method 500, and method 600.

The receiving module 702 is configured to receive first information from a core network device, where the first information is configured for indicating enabling a first network slice and/or disabling a second network slice. The sending module 701 is configured to send service data to the core network device based on the first information.

Optionally, the first network slice and/or the second network slice is one or more of the following: an uplink network slice, a downlink network slice, a network slice serving a first application, a network slice with a bandwidth greater than or equal to a first threshold, or a network slice with a bandwidth less than or equal to a second threshold.

Optionally, the receiving module 702 is further configured to: receive second information from the core network device, where the second information is configured for indicating the first network slice and/or the second network slice.

Optionally, the first information satisfies one of the following: the first information is broadcast; or the first information is carried in a first request, where the first request is configured for requesting to modify a session; or the first information is carried in a second request, where the second request is configured for requesting to de-register a session.

Optionally, the sending module 701 is further configured to: send a third request to the core network device, where the third request is configured for requesting to enable the first network slice and/or disable the second network slice.

Optionally, the first information is configured for indicating enabling the first network slice. The sending module 701 is specifically configured to: send the service data to the core network device by using a first PDU session corresponding to the first network slice, where the service data is data generated by running of a first application, and the first network slice is matched with the first application.

Optionally, the first information is configured for indicating disabling the second network slice. The sending module 701 is specifically configured to: transmit the service data through a second PDU session. The second PDU session is a default PDU session.

It should be understood that the apparatus 700 herein is embodied in a form of a functional module. The term "module" herein may refer to an application specific integrated circuit (application specific integrated circuit, ASIC), an electronic circuit, a processor (e.g., a shared processor, a dedicated processor, or a group processor) configured to execute one or more software or firmware programs, a memory, a combined logic circuit, and/or another suitable component that supports the described functions.

In an optional example, a person skilled in the art may understand that the apparatus 700 may be specifically the terminal device or the core network device (the AMF network element, the SMF network element, or the PCF network element) in the foregoing embodiments, and the apparatus 700 may be configured to perform the processes and/or steps corresponding to the terminal device or the core network device (the AMF network element, the SMF network element, or the PCF network element) in the foregoing method embodiments. To avoid repetition, details are not described herein again.

The apparatus 700 has a function of implementing corresponding steps performed by the terminal device or the core network device (the AMF network element, the SMF network element, or the PCF network element) in the foregoing method. The foregoing function may be implemented by using hardware, or may be implemented by using hardware executing corresponding software. The hardware or the software includes one or more modules corresponding to the foregoing function.

In embodiments of this application, the apparatus 700 in FIG. 7 may alternatively be a chip, for example, an SOC or a Modem.

FIG. 8 shows a schematic block diagram of a data transmission apparatus 800 according to an embodiment of this application. The apparatus 800 includes a processor 801, a transceiver 802, and a memory 803. The processor 801, the transceiver 802, and the memory 803 communicate with each other through an internal connection path. The memory 803 is configured to store instructions. The processor 801 is configured to execute the instructions stored in the memory 803, to control the transceiver 802 to send a signal and/or receive a signal.

It should be understood that the apparatus 800 may be specifically the terminal device or the core network device (the AMF network element, the SMF network element, or the PCF network element) in the foregoing embodiments, and may be configured to perform the steps and/or processes corresponding to the terminal device or the core network device (the AMF network element, the SMF network element, or the PCF network element) in the foregoing method embodiments. Optionally, the memory 803 may include a read-only memory and a random access memory, and provide instructions and data for the processor. A part of the memory may further include a non-volatile random access memory. For example, the memory may further store information about a device type. The processor 801 may be configured to execute the instructions stored in the memory, and when the processor 801 executes the instructions stored in the memory, the processor 801 is configured to perform the steps and/or processes of the foregoing method embodiments. The transceiver 802 may include a transmitter and a receiver. The transmitter may be configured to implement steps and/or processes corresponding to the foregoing transceiver for performing a sending action. The receiver may be configured to implement steps and/or processes corresponding to the foregoing transceiver for performing a receiving action.

It should be understood that in embodiments of this application, the processor may be a central processing unit (central processing unit, CPU), and the processor may alternatively be another general-purpose processor, a digital signal processor (DSP), an application specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, the steps of the foregoing method may be implemented by using a hardware integrated logic circuit in the processor or instructions in a form of software. The steps of the method disclosed in combination with embodiments of this application may be directly performed by a hardware processor, or may be performed through a combination of hardware and software modules in the processor. The software module may be stored in a storage medium that is mature in the art, such as a random access memory, a flash memory, a read-only memory, a programmable read-only memory, an electrically erasable programmable memory, or a register. The storage medium is located in the memory. The processor executes the instructions in the memory, and completes the steps of the foregoing method in combination with hardware thereof. To avoid repetition, details are not described herein again.

Some embodiments of this application provide a chip system, applied to a terminal. The chip system includes at least one processor and an interface. The interface is configured to receive instructions and transmit the instructions to the at least one processor. The at least one processor runs the instructions, so that the terminal performs the foregoing paging message processing method. The chip system may be a Modem or a system on chip (system on chip, Soc) including a Modem. The foregoing method may be implemented by the Modem or the like.

This application further provides a computer-readable storage medium. The computer-readable storage medium is configured to store a computer program, and the computer program configured for implementing the method in the foregoing method embodiments.

This application further provides a computer program product. The computer program product includes a computer program (which may alternatively be referred to as code or an instruction). When the computer program runs on a computer, the computer may perform the method in the foregoing method embodiments.

A person of ordinary skill in the art may be aware that in combination with the examples described in embodiments disclosed in this specification, modules and algorithm steps can be implemented by electronic hardware or a combination of computer software and electronic hardware. Whether the functions are executed in a mode of hardware or software depends on particular applications and design constraint conditions of the technical solutions. A person skilled in the art may use different methods to implement the described functions for each particular application, but it shall not be considered that the implementation goes beyond the scope of this application.

Those skilled in the art are able to clearly understand that for easy and concise description, the specific working processes of the system, apparatus, and module described previously may refer to the corresponding processes in the method embodiment, and are not described herein.

In the several embodiments provided in this application, it should be understood that the disclosed system, apparatus, and method may be implemented in other manners. For example, the apparatus embodiment described above is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one place, or may be distributed on a plurality of network modules. Some or all of the modules may be selected according to actual needs to achieve the objectives of the solutions of the embodiments.

In addition, functional modules in embodiments of this application may be integrated into one processing module, or each module may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or the part contributing to the related technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A data transmission method, wherein the method comprises:
sending first information to a terminal device when it is determined that a preset condition is satisfied, wherein the first information is configured for indicating enabling a first network slice and/or disabling a second network slice, and the preset condition is related to a load and/or a network status of the core network device; and
receiving service data from the terminal device based on the first information.

2. The method according to claim 1, wherein the first information is configured for indicating disabling the second network slice, and the preset condition comprises one or more of the following:
an occupancy rate of processor resources is greater than or equal to a first preset threshold;
an occupancy rate of memory resources is greater than or equal to a second preset threshold;
an occupancy rate of network resources is greater than or equal to a third preset threshold;
a ratio of the number of users accessing the second network slice to a saturation value is greater than or equal to a fourth preset threshold;
a disconnection rate of terminal devices not accessing the second network slice is greater than or equal to a fifth preset threshold;
a packet loss rate of terminal devices not accessing the second network slice is greater than or equal to a sixth preset threshold; or
a network latency of terminal devices not accessing the second network slice is greater than or equal to a seventh preset threshold.

3. The method according to claim 2, wherein the method further comprises:
receiving, from terminal devices not accessing the second network slice, information for indicating network data, wherein the network data comprises one or more of the following: a disconnection rate, a packet loss rate, or a network latency.

4. The method according to any one of claims 1 to 3, wherein the first information is configured for indicating enabling the first network slice, and the preset condition comprises one or more of the following:
an occupancy rate of processor resources is less than or equal to an eighth preset threshold;
an occupancy rate of memory resources is less than or equal to a ninth preset threshold; or
an occupancy rate of network resources is less than or equal to a tenth preset threshold.

5. The method according to any one of claims 1 to 4, wherein the first network slice and/or the second network slice is one or more of the following: an uplink network slice, a downlink network slice, a network slice serving a first application, a network slice with a bandwidth greater than or equal to a first threshold, or a network slice with a bandwidth less than or equal to a second threshold.

6. The method according to any one of claims 1 to 5, wherein the method further comprises:
sending second information to the terminal device, wherein the second information is configured for indicating the first network slice and/or the second network slice.

7. The method according to claim 6, wherein the first information and/or the second information satisfies one of the following:
the first information is broadcast; or
the first information is carried in a first request, wherein the first request is configured for requesting to modify a session; or
the first information is carried in a second request, wherein the second request is configured for requesting to de-register a session.

8. The method according to any one of claims 1 to 7, wherein the method further comprises:
receiving a third request from the terminal device, wherein the third request is configured for requesting to enable the first network slice and/or disable the second network slice; and
the sending first information to the terminal device comprises:
sending the first information to the terminal device in response to the third request.

9. The method according to any one of claims 1 to 8, wherein the first information is configured for indicating enabling the first network slice, the service data is data generated by running of a first application, the service data is transmitted through a first PDU session corresponding to the first network slice, and the first network slice is matched with the first application.

10. The method according to any one of claims 1 to 9, wherein the first information is configured for indicating disabling the second network slice, the service data is transmitted through a second PDU session, and the second PDU session is a default PDU session.

11. A data transmission method, wherein the method comprises:
receiving first information from a core network device, wherein the first information is configured for indicating enabling a first network slice and/or disabling a second network slice; and
sending service data to the core network device based on the first information.

12. The method according to claim 11, wherein the first network slice and/or the second network slice is one or more of the following: an uplink network slice, a downlink network slice, a network slice serving a first application, a network slice with a bandwidth greater than or equal to a first threshold, or a network slice with a bandwidth less than or equal to a second threshold.

13. The method according to claim 11 or 12, wherein the method further comprises:
receiving second information from the core network device, wherein the second information is configured for indicating the first network slice and/or the second network slice.

14. The method according to any one of claims 11 to 13, wherein the first information satisfies one of the following:
the first information is broadcast; or
the first information is carried in a first request, wherein the first request is configured for requesting to modify a session; or
the first information is carried in a second request, wherein the second request is configured for requesting to de-register a session.

15. The method according to any one of claims 11 to 14, wherein the method further comprises:
sending a third request to the core network device, wherein the third request is configured for requesting to enable the first network slice and/or disable the second network slice.

16. The method according to any one of claims 11 to 15, wherein the first information is configured for indicating enabling the first network slice; and
the sending service data to the core network device comprises:
sending the service data to the core network device by using a first PDU session corresponding to the first network slice, wherein the service data is data generated by running of a first application, and the first network slice is matched with the first application.

17. The method according to any one of claims 11 to 16, wherein the first information is configured for indicating disabling the second network slice; and
the sending service data to the core network device comprises:
transmitting the service data by using a second PDU session, wherein the second PDU session is a default PDU session.

18. A data transmission apparatus, comprising a module for performing the method according to any one of claims 1 to 10 or any one of claims 11 to 17.

19. A data transmission apparatus, comprising: a processor, wherein the processor is coupled to a memory, the memory is configured to store a computer program, and when the processor calls the computer program, the apparatus performs the method according to any one of claims 1 to 10 or any one of claims 11 to 17.

20. A computer-readable storage medium, configured to store a computer program, wherein the computer program comprises instructions for implementing the method according to any one of claims 1 to 10 or any one of claims 11 to 17.

21. A chip system, comprising at least one processor and a communication interface, wherein the communication interface and the at least one processor are interconnected via a circuit, and the at least one processor is configured to run a computer program or instructions to perform the method according to any one of claims 1 to 10 or any one of claims 11 to 17.

22. A computer program product, wherein the computer program product comprises a computer program code, and when the computer program code is run on a computer, the computer implements the method according to any one of claims 1 to 10 or any one of claims 11 to 17.
